# EUROPEAN PATENT SPECIFICATION

(11) **EP 1 612 631 B1**
(45) Date of publication and mention of the grant of the patent: **09.11.2011**
(21) Application number: 05425466.9
(22) Date of filing: 30.06.2005
(51) Int. Cl.: G05D 1/02

(54) **Perimeter tracking system**
Perimeter-Verfolgungssystem
Système de suivi d'un périmètre

(30) Priority: 02.07.2004 IT FI20040151
(43) Date of publication of application: 04.01.2006
(73) Proprietor: Zucchetti Centro Sistemi S.p.a., 52028 Terranuova Bracciolini (IT)
(72) Inventor: Bernini, Fabrizio, 52021 Bucine - Arezzo (IT)
(74) Representative: Baroni, Matteo

(56) References cited:
- WO-A-03/065140
- US-B1- 6 300 737

## Description

The present invention refers to a perimeter tracking system, especially of the type able to discriminate the inner from the outer position of a body with respect to a perimeter of a given area.

Typical applications of such a system concern the automation of repetitve tasks inside a preset area, for example, the cutting of grass in a garden, the cleaning of a floor, or other similar operations.

Several systems are known which are used to keep an operating robot within a given area by properly guiding it so that it covers the whole extension thereof.

Many of the known systems exploit special effects due to electromagnetic phenomena caused by electric signals which go through cables previously laid along the perimetr of the concerned area.

Already devices are known, in particular, which utilize the variations in the magnetic field as a function of the distance from the perimetric cable. Such systems, however, have the drawback that the robot is not able to recognize the inside from the outside and, therefore, it would keep moving away without any control when accidentally leaving the perimeter.

Another type of known systems provides that the perimeter electric cable be fed with predetermined control signal made up of two or more harmonic components. The device which operates on the robot is able, by extracting the received components of the control signal and suitably processing them, to track the outer or inner position of the same robot on the basis of the differences from the original signal, and thus providing the driving actuator with the proper commands.

An already known prior art system is disclosed by WO03/065140 showing a tracking method in which the amplitude of signals transmitted by the limiting cable are repeatedly measured and stored in independent memories, and in which a microprocessor has to perform a numerical analysis to interpret the number of samplings necessary to reach a threshold value and which represent a distance from the limiting cable.

US 6 300 737 shows a tracking method in which a signal generator is provided to feed a limiting cable with current containing at least two alternating-current components of different frequency, and the components are lying in a known relation of time to each other.

However, systems of this type have the drawback of a remarkable complexity, both on the side of generation and supply of the control signal, and on the side of reception and processing of the signal's components. It is in fact necessary that the time and frequency relation of the control signal's components be strictly observed to avoid false trackings, undesidered phase shifts or other malfunctions.

Moreover, on the reception side, it will be necessary to remove the different components, to make measurements on these components, and to process the rusults to achieve the desired outcome.

The object of the present invention is to solve the above problems by providing, in the first place, a method for tracking the position of a body relative to the perimeter of an area, as defined in the independent claim 1.

A further object of the present invention is to provide a tracking device able to sense a magnetic field and generate a corresponding periodic electric signal, as defined in the independent claim 8.

The present invention refers also to a system for tracking the position of a body relative to a perimeter of an area, as defined in the independent claim 14.

Further aspects of the present invention being defined in the dependent claims.

The main advantage of the present invention is given by the fact that the perimeter electric cable utilizes a signal consisting of a single harmonic, thereby eliminating all the initial difficulties concerning the generation and transmission of different components being linked to each other by rigid time relations.

A second advantage of the system according to the present invention lies in the fact that the single electric signal used to feed the perimeter electric cable has not to fulfil stringent and rigid requirements and, therefore, also its generation is surely a simpler and more economical operation.

A third advantage is that, on the reception side, it is not necessary to extract any component from the received control signal, inasmuch as it is possible to directly use the whole signal for evaluating the position of the robot relative to the perimetric cable. Further adavantages, characteristics and ways of use of the present invention will result clear from a reading of the following detailed description of a preferred embodiment thereof, given as an exemplary and non limiting illustration thereof, reference being made to the accompanying drawings, wherein:
Fig. 1 is an exemplary diagram of a system according to the present invention;
Fig. 2 is a graph of a control signal for a system according to the present invention;
Fig. 3 is a block diagram of the position-tracking section in a system according to the present invention;
Figs. 4 and 5 are electric diagrams of the position-tracking device according to the present invention;
Fig. 6 is a graph of a control signal received from the device of Fig. 3 when the same device is inside of the area's perimeter; and
Fig. 7 is a graph of a control signal received from the device of Fig. 3 when the same device is outside of the area's perimeter.

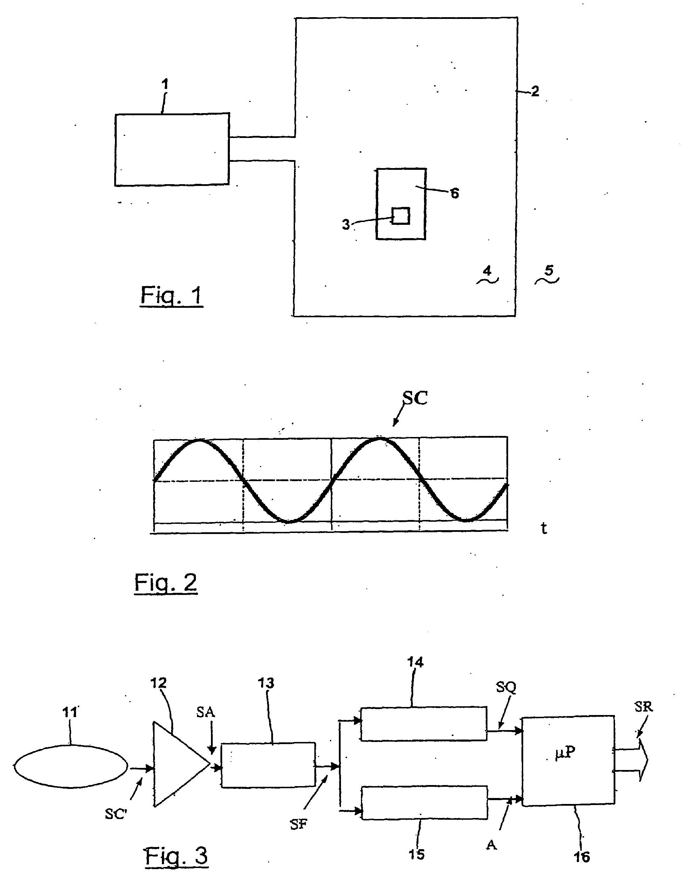

With reference to Fig. 1, the latter shows a schematic diagram of a system according to the present invention.

In particular, an area 4 to be controlled is delimited by a perimeter electric cable 2. Located inside the area 4 is a body 6, for example, a working tool, a robot or other, which has to move within the area 4 without moving out of the external region 5.

In the following description reference will be made to a robot, a term by which it is meant a motor-driven device able to move autonomously in the area 4.

The perimetric cable 2 is connected to signal generator 1 able to feed the same perimetric cable with a control electric signal SC, thereby generating, as it is known, a magnetic field around the same cable, having characteristics dipending on the wave form of the electric signal SC.

The robot 6 comprises a sensing device 4 able to sense the magnetic field and draw indications therefrom, as will be described in detail, relevant to the position of the same robot with respect to the perimeter of the area 4.

Depicted in Fig. 2 is a graph of a control signal SC produced by the generator 1 and fed to the perimetric cable 2.

The control signal SC is a periodic sinusoidal and substantially pure signal, that is, consisting of only one harmonic component having a preset frequency.

The generator 1 is an electronic device provided with a microprocessor which runs a software for generating the sinusoidal signal.

Advantageously, the signal's cycle T may be selected according to any specific application. Prefereably, a cycle T for the signal is chosen equal to approximately 12.8 µs corresponding to a frequency of 7.8125 kHz.

The signal thus generated is fed through the perimetric cable connected with the device. The microprocessor includes a quartz clock to ensure the stability of the system's clock within given tolerances, and thus the stability of frequency of the generated signal.

It will be appreciated that such frequency value is not to be considered as limitative. It is actually possible to use signals exhibiting different values and still achieving the desired result.

This characteristic is of considerable importance espacially when considering the case of operating with more than one device within areas adjacent or close to each other. In such case, in fact, it is possible to preset the operation of the plurality of machines at different frequencies, thereby avoiding any mutual interference.

The only essential characteristic, as will be evident later on, is that the signal SC is periodic and includes one harmonic component only.

Represented in Fig. 3 is a block diagram of a tracking device 3 being installed, for example, on board of a robot 6 which moves about within the area 4.

The device 3 detects, through a receiver element such as an antenna made up of coils wound on a ferromagnetic core, the magnetic field that the perimetric electric cable generates when an electric current goes therethrough.

The leads acting as an antenna will be run through, as dictated by the laws of electromagnetism, by an electric current whose pattern depends in fact on the variations of the magnetic field.

The electric signal SC thus generated is then fed as an input to an amplification stage 12.

The output signal from the amplification stage 12, indicated as SA, is then sent as an input to a filtering stage 13. The filtered signal SF, on one hand, is squared by a squaring circuit 14, thereby obtaining a signal SQ and, on the other hand, is fed as an input to an amplitude-sensing circuit 15 that produces an output signal A proportional to the amplitude of the input signal.

The signals SQ and A are both fed as inputs to a microprocessor unit 16 able to process them.

In particular, it is readily understood that the signal SC' generated according to the variations of the magnetic field, is substantially similar to the electric signal SC which causes the magnetic field itself.

The microprocessor 16 of the reception device runs a software for the analysis of the signal.

The reception device is mounted on the robot and transmits continually thereto the result of the analysis of the signal (absent/present/in/out signal) via an output signal SR.

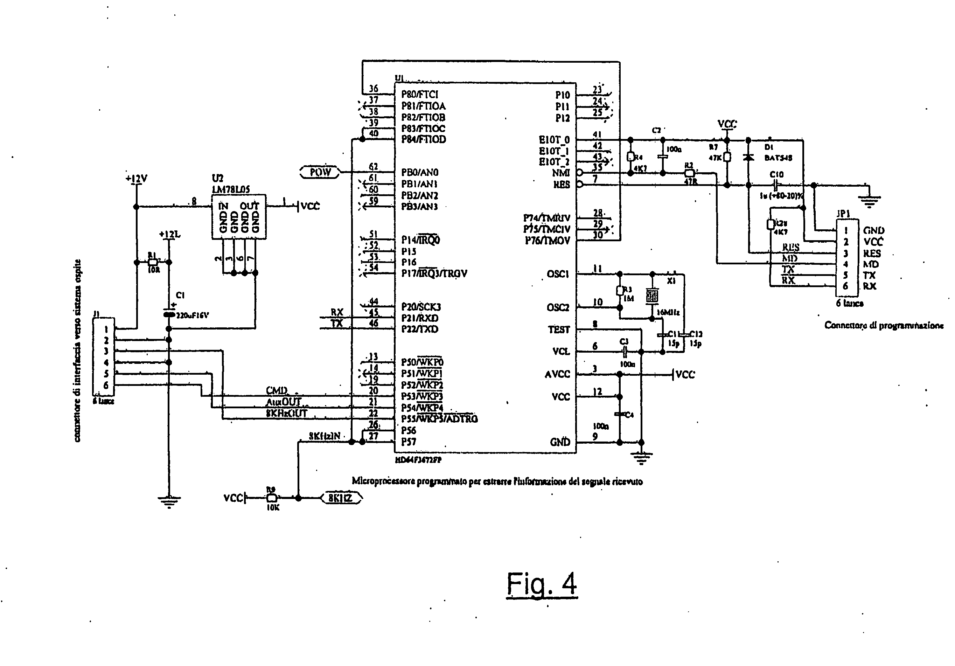

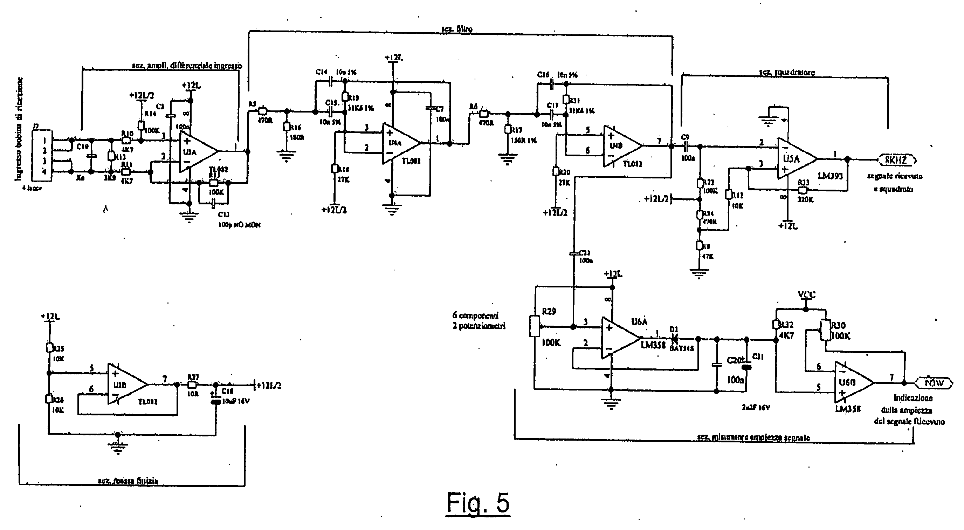

Figs. 4 and 5 are electric diagrams concerning the reception device.

The receiver's microprocessor is provided with a quartz crystal to ensure accurate time measurements.

The microprocessor's timer has such a resolution as to be sufficient to make significant measurements of the cycle of the input signal (500 kHz = 64 ticks per signal's cycle).

Given hereinafter is a detailed description of the operation of the present invention and of how the signals are processed so as to safely discriminate over the robot's position (outside/inside).

It is known that the magnetic field takes up opposite directions depending whether it is sensed inside or outside the area delimited by the perimetric cable. This obviously affects the wave form of the resulting signal SC' induced by the magnetic field on the receiver.

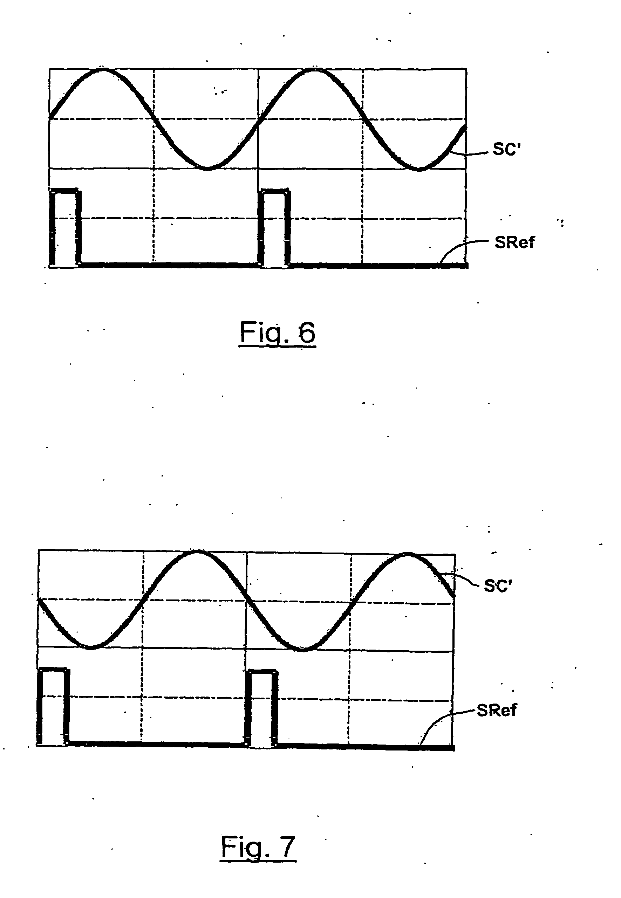

Fig. 6 is a graph showing a signal SC' being sensed when the tracking device is inside the area 4 delimited by the perimetric cable. The signal SC' has a periodic wave form with a T cycle.

The robot is to be started within the perimeter. Upon the starting stage, the reception software measures the duration of a sufficiently high number of signal's cycles, for example 16,000 cycles, corresponding to a length of 2 seconds. This duration is called "base interval" and is equal to the number of measured cycles times the number of ticks per cycle (16,000 x 64 = 1,024,000 ticks). In practice, the transmitter's clock is not perfectly synchronized with that of the receiver and, therefore, the interval length does not coincide with the theoretic duration. For any transmitter/receiver pair, a different measure is to be expected. This initial measurement is thus necessary to "synchronize" the two clocks.

The microprocessor 16 thus generates via software an internal reference signal, for example a periodic impulse signal having a cycle T, like that of the signal SC' and in phase therewith.

The signal Sref is also plotted in Fig. 6, this figure showing clearly how, in this case, the two signals have a similar phase pattern.

According to what has been set forth hereinbefore, it is evident that until the robot remains inside the perimeter, the rise fronts of the input signal SC' correspond to the rise fronts of the internally generated signal Sref.

Once the base interval has been measured, the robot starts to move and the receiver's software keeps analysing the input signal by comparing it with the internal reference signal Sref.

Fig. 7 shoes the curve of a signal SC' being sensed when the tracking device is outside the area 4 delimited by the perimetric cable.

As shown in the graph of Fig. 7, when the tracking device is outside the area delimited by the perimetric cable, the signal SC', although exhibiting a periodic wave form of T cycle, results out of phase by half cycle with respect to the reference signal Sref.

When the robot is outside the perimeter, the rise fronts of the internal signal coincide with the centre of the cycles of the signal SC' being sensed.

Accordingly, by utilizing a sinusoidal control signal SC at constant frequency, the comparison thereof with the induced signal SC' (or its processing SQ), can be easily utilized for determining the position of the tracking device 3 (and thus of the robot 6) relative to the area to be controlled.

The microprocessor 16 provides therefore an output tracking signal SR whose characteristics (wave form, values, etc.) depend on the phase difference measured between the signal SC' being sensed and the internal reference signal Sref.

The tracking signal SR may be either an analog signal, or, advantageously, a digital signal of two or more values.

The signal SR might therefore be used advantageously to drive a subsequent motion stage of the robot 6 to move the latter anywhow inside the area 4.

Moreover, the reception device, via the microprocessor, is also able to stabilize its distance from the perimetric cable.

To evaluate the distance from the perimetric cable a signal A from the amplitude sensor 15 is used. The latter, in fact, includes a peak rectifier followed by an amplifier which adapts the scale factor to provide the microprocessor with an analog signal A which takes up values in the range of 0 to 5 VCC, according to the amplitude of the input signal (SC'). Such value of signal A, which is converted afterwards into a numerical data by the microprocessor, results proportional to the distance from the cable.

The obtained value, although being merely indicative of the distance, is sufficient to implement some interesting functional capacities in the robot-guiding system.

This makes it possible to program the robot so that it can operate with eccentric figures internal to, and having the same shape as, the perimeter itself, thereby optimizing the cut times and significantly reducing the work times with equal area to be cut.

The present invention has been so far described according to a preferred embodiment thereof, given as an exemplifying and non limiting illustration thereof.

## Claims

1. Method of tracking the position of a moving body (6)with respect to the perimeter of an area (4), comprising the following steps:
- feeding a perimetric electric cable (2), disposed along said perimeter, with an electric control signal (SC) thereby generating a magnetic field, said electric control signal (SC) being a sinusoidal signal substantially pure and having a cycle T;
- sensing said magnetic field in a position;
- generating an electric signal (SC') corresponding to said detected magnetic field,
- generating an electric reference signal (Sref) being initially in phase with said electric signal (SC'); and
- subsequently measuring the phase difference between said electric signal (SC') and said electric reference signal (Sref), the phase relation between said signals depending on the position of the body (6) relative to said perimeter,
**characterized in that** said step of measuring the phase difference between
said electric signal (SC') and said electric reference signal (Ref)) is carried out by comparing one or more rise fronts of said electric signal (SC') with one or more rise fronts of said electric reference signal (Sref).

2. Method according to claim 1, wherein said sinusoidal electric control signal (SC) has a constant and preset frequency.

3. Method according to claim 2, wherein said frequency is equal to 7,8125 kHz.

4. Method according to any claims 1-3, wherein said electric reference signal (Sref) is a periodic impulse signal exhibiting a cycle T equal to that of said electric control signal (SC) .

5. Method according to claim 4, further comprising the step of generating a tracking Signal (SR) able to take up different values depending on said phase difference.

6. Method according to any of the preceding claims, further comprising the step of measuring the amplitude of the input signal (SC'), thereby obtaining a signal (A) proportional to the distance of said body (6) from the perimetric cable (2) .

7. Tracking device (3) of the position of a moving body (6) with respect to the perimeter of an area (4), the tracking device comprising a magnetic field sensor (11) for sensing a magnetic field generated by an electric control signal (SC) which is fed to a perimetric electric cable (2) disposed along said perimeter, said electric control signal (SC) being a sinusoidal signal substantially pure and having a cycle T, a generator of an electric signal (SC') corresponding to the magnetic field being sensed, and a microprocessor unit (16) capable of receiving as an input thereto said electric signal (SC'), generating an electric reference signal (Sref) being initially in phase with said electric signal (SC'), measuring afterwards the phase difference between said electric signal (SC') and said electric reference signal (Sref), the phase region between said signals depending on the position of the body (6) relative to said perimeter,and providing a tracking output signal (SR) able to take up different values depending on said phase difference, **characterized in that** the measure of the phase difference between said electric signal (SC') and said electric reference signal (Ref) is carried out by comparing one or more rise fronts of said electric signal (SC') with one or more rise fronts of said electric reference signal (Sref).

8. Tracking device (3) according to claim 7, wherein said electric signal (SC') is a pure sinusoidal signal at constant frequency having a T cycle.

9. Tracking device (3) according to claim 8, wherein said frequency is equal to 7,8125 kHz.

10. Tracking device (3) according to any of claims 7-9, wherein said electric reference signal (Sref) is a periodic impulse signal exhibiting a cycle T equal to that of said signal (SC').

11. Tracking device (3) according to any of claims 7-10, further comprising an amplitude sensor (15) able to measure the amplitude of the input signal (SC'), by providing an output signal (A) proportional to the distance of said body (6) from the perimetric electric cable (2).

12. System for tracking the position of a body (6) which moves relative to the Perimeter of an area (4), Comprising:
- a perimetric electric cable (2) disposed along said perimeter;
- a signal generator (1) able to feed said cable with an electric control signal (SC) of pure sine curve, thereby generating a corresponding magnetic field; and
- a tracking device (3) according to any of claims 7-11, disposed on said body (6).

## Patentansprüche

1. Verfahren zum Verfolgen der Position eines sich bewegenden Körpers (6) in Bezug auf den Perimeter eines Gebietes (4), umfassend die folgenden Schritte:
- Speisen eines perimetrischen Elektrokabels (2), das entlang dem Perimeter angeordnet ist, mit einem elektrischen Steuersignal (SC), wodurch ein Magnetfeld erzeugt wird, wobei das elektrische Steuersignal (SC) ein sinusförmiges Signal ist, das im Wesentlichen rein ist und eine Periode T aufweist
- Erkennen des Magnetfelds in einer Position;
- Erzeugen eines elektrischen Signals (SC'), das dem erfassten Magnetfeld entspricht;
- Erzeugen eines elektrischen Referenzsignals (Sref), das zu Beginn phasengleich mit dem elektrischen Signal (SC') ist; und
- anschließendes Messen der Phasendifferenz zwischen dem elektrischen Signal (SC') und dem elektrischen Referenzsignal (Sref), wobei die Phasenbeziehung zwischen den Signalen von der Position des Körpers (6) in Bezug auf den Perimeter abhängt, **dadurch gekennzeichnet, dass** der Schritt des Messens der Phasendifferenz zwischen dem elektrischen Signal (SC') und dem elektrischen Referenzsignal (REF) durch Vergleichen einer oder mehrerer Anstiegsfronten des elektrischen Signals (SC') mit einer oder mehreren Anstiegsfronten des elektrischen Referenzsignals (Sref) ausgeführt wird.

2. Verfahren nach Anspruch 1, wobei das sinusförmige, elektrische Steuersignal (SC) eine konstante und vorgegebene Frequenz aufweist.

3. Verfahren nach Anspruch 2, wobei die Frequenz 7,8125 kHz beträgt.

4. Verfahren nach einem der Ansprüche 1 bis 3, wobei das elektrische Referenzsignal (Sref) ein periodisches, impulsförmiges Signal ist, das eine Periode T aufweist, die der des elektrischen Steuersignals (SC) entspricht.

5. Verfahren nach Anspruch 4, ferner umfassend den Schritt des Erzeugens eines Verfolgungssignals (SR), das dazu fähig ist, je nach Phasendifferenz verschiedene Werte zu übernehmen.

6. Verfahren nach einem der vorangehenden Ansprüche, ferner umfassend den Schritt des Messens der Amplitude des Eingangssignals (SC'), wodurch ein Signal (A) erhalten wird, das proportional zum Abstand des Körpers (6) vom Perimeterkabel (2) ist.

7. Vorrichtung (3) zur Verfolgung der Position eines sich bewegenden Körpers (6) in Bezug auf den Perimeter eines Gebietes (4), wobei die Verfolgungsvorrichtung einen Magnetfeldsensor (11) zum Erkennen eines
Magnetfelds umfasst, das durch ein elektrisches Steuersignal (SC) erzeugt wird, mit dem ein perimetrisches Elektrokabel (2) gespeist wird, das entlang dem Perimeter angeordnet ist, wobei das elektrische Steuersignal (SC) ein sinusförmiges Signal ist, das im Wesentlichen rein ist und eine Periode T aufweist, einen Erzeuger eines elektrischen Signals (SC'), das dem zu erkennenden Magnetfeld entspricht sowie eine Mikroprozessoreinheit (16), die in der Lage ist, als Eingang das elektrische Signal (SC') zu empfangen, wobei sie ein elektrisches Referenzsignal (Sref) erzeugt, das zu Beginn phasengleich mit dem elektrischen Signal (SC') ist, anschließend die Phasendifferenz zwischen dem elektrischen Signal (SC') und dem elektrischen Referenzsignal (Sref) zu messen, wobei die Phasenbeziehung zwischen den Signalen von der Position des Körpers (6) in Bezug auf den Perimeter abhängt, sowie ein Verfolgungsausgangssignal (SR) bereitzustellen, das dazu fähig ist, je nach Phasendifferenz verschiedene Werte zu übernehmen, **dadurch gekennzeichnet, dass** das Messen der Phasendifferenz zwischen dem elektrischen Signal (SC') und dem elektrischen Referenzsignal (Ref) durch Vergleichen einer oder mehrerer Anstiegsfronten des elektrischen Signals (SC') mit einer oder mehreren Anstiegsfronten des elektrischen Referenzsignals (Sref) ausgeführt wird.

8. Verfolgungsvorrichtung (3) nach Anspruch 7, wobei das elektrische Signal (SC') ein reines, sinusförmiges Signal bei einer konstanten Frequenz, aufweisend eine Periode T, ist.

9. Verfolgungsvorrichtung (3) nach Anspruch 8, wobei die Frequenz 7,8125 kHz beträgt.

10. Verfolgungsvorrichtung (3) nach einem der Ansprüche 7 bis 9, wobei das elektrische Referenzsignal (Sref) ein periodisches, impulsförmiges Signal ist, das eine Periode T aufweist, die der des Signals (SC') entspricht.

11. Verfolgungsvorrichtung (3) nach einem der Ansprüche 7 bis 10, ferner umfassend einen Amplitudensensor (15), der dazu fähig ist, die Amplitude des Eingangssignals (SC') zu messen, indem ein Ausgangssignal (A), das proportional zum Abstand des Körpers (6) vom perimetrischen Elektrokabel (2) ist, bereitgestellt wird.

12. System zur Verfolgung der Position eines Körpers (6), der sich in Bezug auf den Perimeter eines Gebietes (4) bewegt, umfassend:
- ein perimetrisches Elektrokabel (2), das entlang dem Perimeter angeordnet ist;
- ein Signalerzeuger (1), der dazu fähig ist, das Kabel mit einem elektrischen Steuersignal (SC) einer reinen Sinuskurve zu speisen, wodurch ein entsprechendes Magnetfeld erzeugt wird; und
- eine Verfolgungsvorrichtung (3) nach einem der Ansprüche 7 bis 11, die auf dem Körper (6) angeordnet ist.

## Revendications

1. Méthode de suivi de la position d'un corps en mouvement (6) par rapport au périmètre d'une zone (4), comprenant les étapes suivantes ;
- transmettre à un câble électrique périphérique (2), positionné le long dudit périmètre, un signal de commande électrique (SC), générant ainsi un champ magnétique, ledit signal de commande électrique (SC) étant un signal sinusoïdal essentiellement pur et ayant une période T ;
- détecter ledit champ magnétique dans une position ;
- générer un signal électrique (SC') correspondant audit champ magnétique détecté ;
- générer un signal de référence électrique (Sréf) étant initialement en phase avec ledit signal électrique (SC') ; et
- mesurer ensuite le déphasage entre ledit signal électrique (SC') et ledit signal de référence électrique (Sréf), la relation de phase entre lesdits signaux dépendant de la position du corps (6) par rapport audit périmètre, **caractérisée en ce que** ladite étape de mesure du déphasage entre ledit signal électrique (SC') et ledit signal de référence électrique (Réf)) se fait en comparant un ou plusieurs fronts ascendants dudit signal électrique (SC') avec un ou plusieurs fronts ascendants dudit signal de référence électrique (Sréf).

2. Méthode selon la revendication 1, dans laquelle ledit signal de commande électrique sinusoïdal (SC) a une fréquence constante et préétablie.

3. Méthode selon la revendication 2, dans laquelle ladite fréquence est égale à 7,8125 kHz.

4. Méthode selon l'une quelconque des revendications 1-3, dans laquelle ledit signal de référence électrique (Sréf) est un signal impulsionnel périodique présentant une période T égale à celle dudit signal de commande électrique (SC).

5. Méthode selon la revendication 4, comprenant également l'étape de générer un signal de suivi (SR) pouvant adopter différentes valeurs en fonction dudit déphasage.

6. Méthode selon l'une quelconque des revendications précédentes, comprenant aussi l'étape de mesurer l'amplitude du signal d'entrée (SC'), obtenant ainsi un signal (A) proportionnel à la distance dudit corps (6) depuis le câble périphérique (2).

7. Dispositif de suivi (3) de la position d'un corps en mouvement (6) par rapport au périmètre d'une zone (4), le dispositif de suivi comprenant un détecteur de champ magnétique (11) pour détecter un champ magnétique généré par un signal de commande électrique (SC), qui est transmis à un câble électrique périphérique (2) positionné le long dudit périmètre, ledit signal de commande électrique (SC) étant un signal sinusoïdal essentiellement pur et ayant une période T, un générateur d'un signal électrique (SC') correspondant au champ magnétique détecté, et une unité à microprocesseur (16) pouvant recevoir en entrée ledit signal électrique (SC'), générant un signal de référence électrique (Sréf) étant initialement en phase avec ledit signal électrique (SC'), mesurant par la suite le déphasage entre ledit signal électrique (SC') et ledit signal de référence électrique (Sréf), la relation de phase entre lesdits signaux dépendant de la position du corps (6) par rapport audit périmètre, et fournissant un signal de sortie de suivi (SR) pouvant adopter différentes valeurs en fonction dudit déphasage, **caractérisé en ce que** la mesure du déphasage entre ledit signal électrique (SC') et ledit signal de référence électrique (Réf) se fait en comparant un ou plusieurs fronts ascendants dudit signal électrique (SC') avec un ou plusieurs fronts ascendants dudit signal de référence électrique (Sréf).

8. Dispositif de suivi (3) selon la revendication 7, dans lequel ledit signal électrique (SC') est un signal sinusoïdal pur à fréquence constante ayant une période T.

9. Dispositif de suivi (3) selon la revendication 8, dans lequel ladite fréquence est égale à 7,8125 kHz.

10. Dispositif de suivi (3) selon l'une quelconque des revendications 7-9, dans lequel ledit signal de référence électrique (Sréf) est un signal impulsionnel périodique présentant une période T égale à celle dudit signal (SC').

11. Dispositif de suivi selon l'une quelconque des revendications 7-10, comprenant aussi un détecteur d'amplitude (15) pouvant mesurer l'amplitude du signal d'entrée (SC'), en fournissant un signal de sortie (A) proportionnel à la distance dudit corps (6) depuis le câble électrique périphérique (2).

12. Système de suivi de la position d'un corps (6) qui se déplace par rapport au périmètre d'une zone (4), comprenant :
- un câble électrique périphérique (2) positionné le long dudit périmètre ;
- un générateur de signal (1) pouvant transmettre audit câble un signal de commande électrique (SC) de courbe sinusoïdale pure, générant ainsi un champ magnétique correspondant ; et
- un dispositif de suivi (3) selon l'une quelconque des revendications 7-11, positionné sur ledit corps (6).
